# FASCICULE DE BREVET EUROPEEN

(11) **EP 3 548 728 B1**
(45) Date de publication et mention de la délivrance du brevet: **07.10.2020**
(21) Numéro de dépôt: 17816988.4
(22) Date de dépôt: 05.12.2017
(51) Int. Cl.: F02D 23/02, F02D 33/02, F02D 41/10, F02D 41/24, F02B 37/24, F02D 41/04, F02B 37/18, F02B 39/00

(54) **PROCEDE DE COMMANDE D'UN TURBOCOMPRESSEUR DE SURALIMENTATION POUR UN MOTEUR A COMBUSTION INTERNE**
VERFAHREN ZUR STEUERUNG EINES TURBOKOMPRESSORS ZUR AUFLADUNG FÜR EINE BRENNKRAFTMASCHINE
METHOD OF CONTROLLING A SUPERCHARGING TURBOCOMPRESSOR FOR AN INTERNAL COMBUSTION ENGINE

(30) Priorité: 05.12.2016 FR 1661932
(43) Date de publication de la demande: 09.10.2019
(73) Titulaire: Renault S.A.S., 92100 Boulogne-Billancourt (FR)
(72) Inventeur: LEFEBVRE, Alain, 91630 Leudeville (FR)
(86) Numéro de dépôt international: PCT/FR2017/053387
(87) Numéro de publication internationale: WO 2018/104646

(56) Documents cités:
- FR-A1- 2 915 237
- US-A- 6 134 890
- US-A1- 2006 016 188
- US-A1- 2006 196 183

## Description

La présente invention concerne de façon générale le domaine de la commande des systèmes de suralimentation des moteurs à combustion interne par turbocompresseur comprenant un compresseur à géométrie variable.

Un turbocompresseur est composé d'une turbine et d'un compresseur entraîné en rotation par la turbine, à travers un arbre reliant la turbine au compresseur. La turbine est disposée dans un circuit d'échappement du moteur sur le trajet des gaz d'échappement et est entraînée en rotation par les gaz d'échappement. Le compresseur est disposé dans un circuit d'admission sur le trajet d'admission d'air dans le moteur. Il compresse l'air injecté dans le moteur, permettant une suralimentation du moteur par rapport à un régime d'admission à la pression atmosphérique.

La puissance prélevée par la turbine aux gaz d'échappement peut avantageusement être modulée en prévoyant des ailettes mobiles à orientation variable au niveau de l'entrée de la turbine, permettant de modifier la géométrie de la turbine de façon à influer sur l'écoulement des gaz d'échappement sur la turbine. On parle alors de turbine à géométrie variable. La puissance que fournit le compresseur peut également être modulée en disposant des ailettes à orientation variable à l'entrée ou à la sortie du compresseur. On parle de compresseur à géométrie variable.

Des actionneurs sont prévus pour commander l'ouverture et la fermeture des ailettes à orientation variable, qui équipent respectivement la turbine et le compresseur. Les signaux de commande de ces actionneurs sont fournis par une unité de contrôle électronique du moteur (ECU) en fonction du régime et du couple moteur, de façon à asservir la pression dans le collecteur d'admission du moteur. Le document FR 2 915 237 A1 décrit la commande d'un turbocompresseur de suralimentation réglant la géométrie d'un compresseur à géométrie variable, pendant laquelle on commande une modification du réglage de la géométrie du compresseur correspondant à un rendement optimisé du compresseur pour un fonctionnement transitoire du moteur.

L'un des problèmes généralement rencontrés sur les moteurs suralimentés par turbocompresseur concerne le temps de réponse du turbocompresseur. Ce problème résulte essentiellement de l'inertie de la montée en vitesse de l'ensemble tournant du turbocompresseur, qui ne se fait pas de manière instantanée, et des débits du moteur insuffisants pour alimenter correctement la turbine à bas régimes. Ce problème est d'autant plus important que la cylindrée du moteur suralimenté est faible et que les niveaux de pression de suralimentation requis sont élevés. Il en résulte un délai dans l'apparition du couple développé par le moteur en réponse à une commande d'accélération de régime.

Compte tenu de l'augmentation des performances des moteurs à combustion interne suralimentés et en particulier des moteurs de type Diesel, les niveaux de compression sont de plus en plus sollicités. Il est donc important de pouvoir piloter le plus finement possible le turbocompresseur, en particulier pendant les phases transitoires, c'est-à-dire les phases correspondant à des demandes de forte accélération de la part du conducteur, par opposition aux phases stabilisées, correspondant aux phases de fonctionnement à régime moteur sensiblement constant.

En effet, les systèmes de compresseur à géométrie variable tels que décrits ci-dessus, sont généralement réglés pour optimiser les performances du moteur pendant ces phases stabilisées, ou bien encore pour réduire la consommation et les émissions de polluants du véhicule pendant les phases de fonctionnement à charge partielle. Or, lors d'une phase transitoire, les performances du moteur sont inférieures au niveau de charge que le moteur aurait en phase stabilisée, en raison du temps de mise en action du système de suralimentation.

Il existe donc un besoin pour optimiser le rendement du compresseur à géométrie variable pendant les phases transitoires, en particulier pour améliorer les capacités d'accélération du véhicule.

Ce but est atteint grâce à un procédé de commande d'un turbocompresseur de suralimentation pour moteur à combustion interne de véhicule automobile du type comprenant une turbine et un compresseur à géométrie variable, dans lequel on régule la pression de suralimentation en réglant la géométrie du compresseur à géométrie variable à partir d'une valeur de réglage de la géométrie du compresseur, ladite valeur de réglage étant issue d'une première cartographie de valeurs de réglage de la géométrie du compresseur en fonction du régime de rotation du moteur, correspondant à un rendement optimisé du compresseur pour un fonctionnement stabilisé du moteur,
et on détecte un fonctionnement transitoire du moteur à la suite d'une demande brusque d'accélération du moteur, caractérisé en ce que :
- dès la détection, on commande une modification du réglage de la géométrie du compresseur à géométrie variable à partir d'une deuxième cartographie de valeurs de réglage de la géométrie du compresseur en fonction du régime de rotation du moteur, correspondant à un rendement optimisé du compresseur pour un fonctionnement transitoire du moteur, et
- on opère une commutation progressive du réglage de la géométrie du compresseur selon la deuxième cartographie vers le réglage selon la première cartographie, par détection de l'évolution dans le temps du niveau de charge réalisé par le moteur par rapport à un niveau de couple maximal obtenu lorsque le régime moteur est stabilisé.

Avantageusement, on commute progressivement de la deuxième cartographie à la première cartographie lorsque le couple moteur est au moins égal à 90% du niveau de couple maximal obtenu lorsque le régime moteur est stabilisé.

De préférence, la détection du fonctionnement transitoire du moteur comprend la comparaison à un seuil prédéfini de l'évolution dans le temps du degré d'enfoncement de la pédale d'accélérateur associée au moteur.

Avantageusement, le fonctionnement transitoire est détecté lorsque la dérivée par rapport au temps du degré d'enfoncement de la pédale d'accélérateur est supérieure au seuil prédéfini.

Avantageusement, les valeurs de réglage de la géométrie du compresseur cartographiées dans les première et deuxième cartographies permettent de régler l'orientation d'ailettes à orientation variable équipant le compresseur, les valeurs de réglage de la deuxième cartographie étant adaptées pour commander une position d'ouverture plus importante des ailettes que les valeurs de réglage de la première cartographie en fonction du régime moteur.

De préférence, pendant la mise en œuvre de la commande de la géométrie du compresseur à géométrie variable selon la deuxième cartographie, la turbine du turbocompresseur étant une turbine à géométrie variable équipée d'ailettes à orientation variable, on règle l'orientation des ailettes de la turbine dans une position de fermeture des ailettes et on élabore une consigne de richesse pour le moteur correspondant à la richesse maximale admissible par le moteur, tant que la pression mesurée dans le collecteur d'admission du moteur est inférieure à une pression de consigne représentative de la pression de suralimentation requise.

En variante, pendant la mise en œuvre de la commande de la géométrie du compresseur à géométrie variable selon la deuxième cartographie, la turbine du turbocompresseur étant une turbine à géométrie fixe, on commande une soupape de décharge, aménagée en amont de l'entrée de la turbine, dans une position de fermeture, de façon à faire passer la totalité des gaz d'échappement à travers la turbine et on élabore une consigne de richesse pour le moteur correspondant à la richesse maximale admissible par le moteur, tant que la pression mesurée dans le collecteur d'admission du moteur est inférieure à une pression de consigne représentative de la pression de suralimentation requise..

Avantageusement, pendant la mise en œuvre de la commutation progressive du réglage de la géométrie du compresseur selon la deuxième cartographie vers le réglage selon la première cartographie, on régule la pression de suralimentation dans le collecteur d'admission autour de la pression de suralimentation requise pour atteindre le couple maximal lorsque le régime moteur est stabilisé, en modifiant la géométrie de la turbine ou en commandant la soupape de décharge.

L'invention concerne également un moteur à combustion interne suralimenté comprenant un turbocompresseur du type comportant une turbine et un compresseur à géométrie variable, dans lequel une unité de contrôle électronique du moteur agit sur une commande de la géométrie du compresseur, ladite unité de contrôle mettant en œuvre le procédé tel que décrit ci-dessus.

L'invention concerne encore un véhicule automobile comprenant un moteur tel que décrit ci-dessus.

D'autres particularités et avantages de l'invention ressortiront à la lecture de la description faite ci-après, donnée à titre indicatif mais non limitatif, en référence aux dessins annexés sur lesquels :
- la figure 1 est un organigramme illustrant le procédé de commande du turbocompresseur selon l'invention lors de la détection d'une phase transitoire de fonctionnement du moteur;
- la figure 2 est un schéma illustrant différents champs de compresseur correspondant à différentes positions du compresseur à géométrie variable, repérées par les angles des ailettes équipant le compresseur ;
- la figure 3 est un schéma illustrant une première et une deuxième cartographie de valeurs de réglage de la géométrie du compresseur en fonction du régime moteur, utilisée respectivement en fonctionnement stabilité du moteur et en fonctionnement transitoire de celui-ci, conformément à l'invention ;
- la figure 4 est un schéma illustrant l'amélioration des rendements du compresseur.

Le procédé de commande de l'invention s'applique à un turbocompresseur à géométrie variable destiné à assurer la suralimentation d'un moteur à combustion interne, notamment de type Diesel, équipant un véhicule automobile, du type comprenant un actionneur piloté par l'unité de contrôle électronique du moteur (ECU) en fonction du régime et du couple moteur, pour contrôler l'ouverture d'ailettes à orientation variable disposées soit en amont, soit en aval de la roue du compresseur, et qui permettent d'influer sur l'écoulement des gaz dans la roue du compresseur de manière à en améliorer les performances aérodynamiques et étendre la plage de fonctionnement du compresseur.

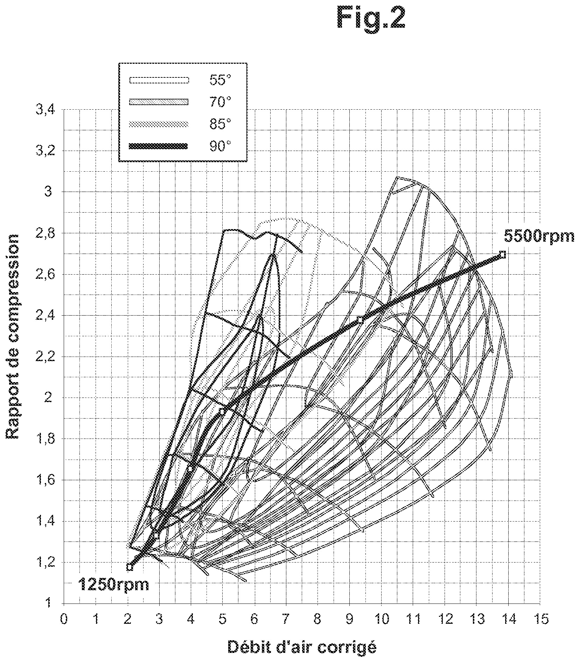

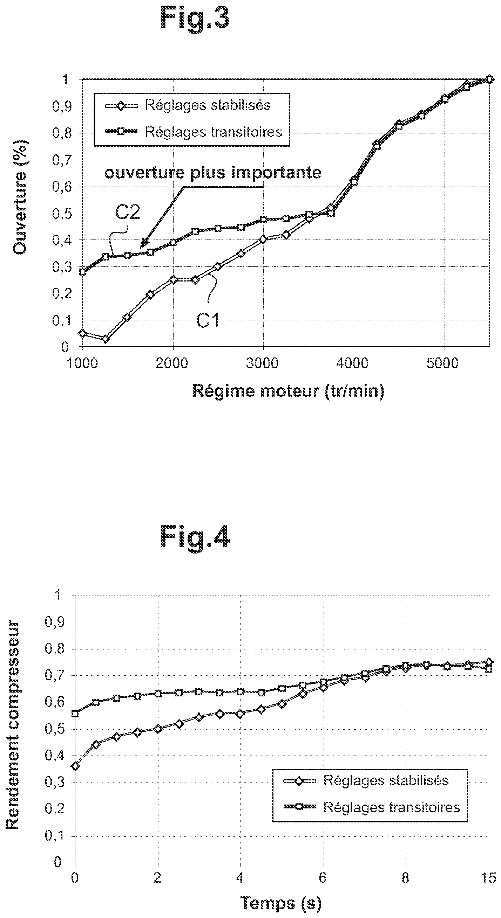

La figure 2 illustre différents champs de compresseur, traduisant pour différentes géométries du compresseur repérées par les angles des ailettes, le taux de compression en fonction du débit d'air dans le compresseur, le taux de compression étant défini comme le rapport de la pression de l'air sortant du compresseur sur la pression de l'air entrant dans le compresseur. L'angle de 55° appliqué à l'orientation des ailettes correspond à une position ouverte du système, tandis que l'angle de 90° correspond à la position la plus fermée, soit à la section de passage des gaz vers la roue du compresseur la plus fermée. A noter que le champ compresseur réel à une position donnée est une interpolation des champs de compresseur aux positions les plus proches de cette position. Avec une optimisation classique du compresseur à géométrie variable, le réglage de l'ouverture des ailettes du compresseur est obtenu de façon à optimiser les rendements du compresseur à régime moteur constant, soit pour optimiser les performances du moteur en stabilisé. La figure 3 illustre à cet égard un exemple d'une première cartographie C1 de valeurs de réglage de la géométrie du compresseur en fonction du régime de rotation du moteur, correspondant aux valeurs de réglage de l'ouverture des ailettes pour lesquelles le rendement du compresseur est optimisé en fonctionnement stabilisé du moteur à régime moteur sensiblement constant.

La figure 3 montre par ailleurs une deuxième cartographie C2 de valeurs de réglage de la géométrie du compresseur en fonction du régime de rotation du moteur, correspondant à des réglages optimaux du compresseur à géométrie variable pendant les phases transitoires du moteur, c'est-à-dire lors de demandes de forte accélération de la part du conducteur. Il apparaît que ces réglages sont très différents de ceux optimisés pour la pleine charge stabilisée du moteur, avec en particulier des angles d'ouvertures des ailettes plus importants. En effet, en fonctionnement stabilisé, la recherche de performances optimales oblige à fermer le système pour obtenir des rapports de compression élevés, et conserver une marge importante vis-à-vis du phénomène de pompage du compresseur. Le procédé de l'invention propose donc de régler différemment la position des ailettes du compresseur à géométrie variable pour le fonctionnement transitoire du moteur, en appliquant la deuxième cartographie de réglage de l'ouverture des ailettes conçue pour optimiser les rendements du compresseur pendant ces phases transitoires du moteur.

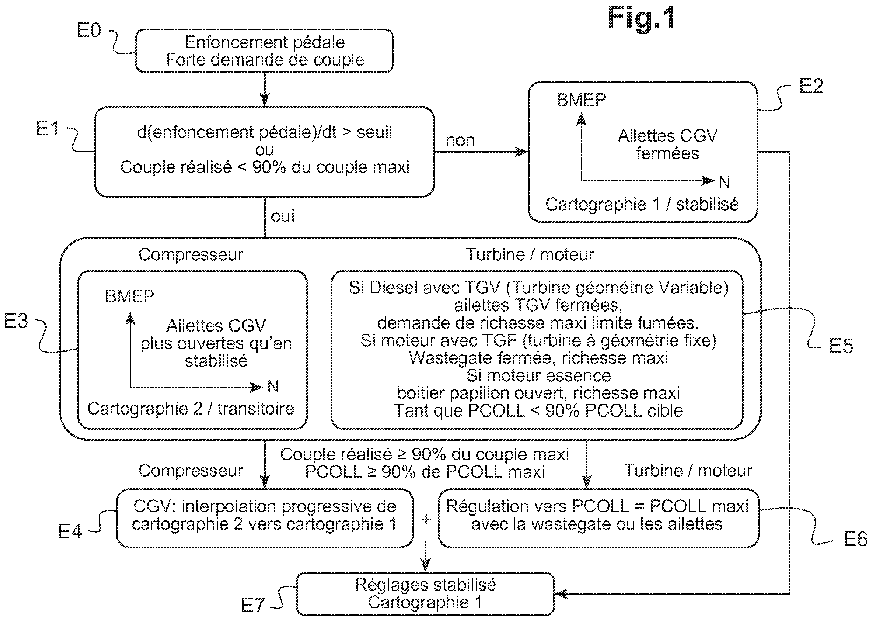

On utilise l'information recueillie par un capteur de pression de suralimentation et un capteur de position de la pédale d'accélérateur associée au moteur, de façon à situer le niveau de charge du moteur et pour détecter la demande de fort couple en fonctionnement transitoire du moteur. En référence à la figure 1, dans une étape E0, lors d'une demande de fort couple, le fonctionnement transitoire du moteur est détecté, dans une étape E1, par la comparaison à un seuil prédéfini de l'évolution dans le temps du degré d'enfoncement de la pédale d'accélérateur. Le fonctionnement transitoire est par exemple détecté lorsque la dérivée par rapport au temps du degré d'enfoncement de la pédale d'accélérateur est supérieure à un seuil prédéfini ou par une demande de couple correspondant par exemple à une valeur supérieure à 90% du couple maximal. Si aucune des ces conditions n'est vérifiée, alors le procédé applique une étape E2, dans laquelle on règle la position des ailettes du compresseur en utilisant une première cartographie de valeurs de réglage de la géométrie du compresseur en fonction du régime de rotation du moteur, correspondant à un rendement optimisé du compresseur pour un fonctionnement stabilisé du moteur.

Par contre, en cas de détection d'un fonctionnement transitoire, on applique une étape E3, dans laquelle on utilise pour le réglage de la position des ailettes du compresseur, une deuxième cartographie de valeurs de réglage de la géométrie du compresseur en fonction du régime de rotation du moteur, correspondant à un rendement optimisé du compresseur pour un fonctionnement transitoire du moteur. Plus particulièrement, cette deuxième cartographie, utilisée lorsqu'un fonctionnement transitoire du moteur est détecté, est adaptée pour commander une position d'ouverture des ailettes plus importante que celle résultant des valeurs de réglage de la première cartographie en fonction du régime moteur. Cette deuxième cartographie est utilisée tant que le niveau de couple n'a pas atteint par exemple 90% du niveau de couple maximal obtenu lorsque le régime moteur est stabilisé. Lorsque cette valeur de couple est atteinte ou dépassée, dans une étape E4, on passe progressivement de la deuxième cartographie à la première cartographie pour le réglage de la position des ailettes du compresseur et la première cartographie sera totalement utilisée en fin de fonctionnement transitoire du moteur.

Aussi, le réglage des ailettes de modification de la géométrie du compresseur à géométrie variable est assuré en appliquant deux stratégies différentes de réglage qui sont utilisées en fonction de l'état de fonctionnement du moteur à combustion interne, selon qu'une phase de fonctionnement en transitoire est détectée ou non. Les réglages de la position des ailettes lorsque la phase transitoire est détectée garantissent une ouverture plus importante des ailettes pendant la durée de la phase transitoire.

Simultanément à la modification des réglages de la géométrie du compresseur, qui est appliquée par le procédé de commande lorsqu'un fonctionnement transitoire est détecté lors d'une demande de fort couple, le procédé de commande est également conçu pour agir au niveau du moteur et de la turbine du turbocompresseur dans une étape E5.

Dans le cas où la turbine du turbocompresseur est une turbine à géométrie variable équipée d'ailettes à orientation variable, pendant la mise en œuvre de la modification des réglages de la géométrie du compresseur à l'étape E3, on règle simultanément dans l'étape E5 l'orientation des ailettes de la turbine dans une position de fermeture des ailettes. Dans cette même étape E5, on élabore une consigne de richesse pour le moteur correspondant à la richesse maximale admissible par le moteur. La richesse maximale admissible par le moteur correspond à la limite en dessous de laquelle la qualité de la combustion est acceptable (richesse en limite de fumées sur un moteur Diesel ou richesse optimale de l'ordre de 1 à 1,15 sur un moteur à essence).

En variante à l'étape E5, dans le cas où la turbine du turbocompresseur est une turbine à géométrie fixe, on commande la soupape de décharge (« waste gate » en anglais) dans une position de fermeture, de façon à faire passer la totalité des gaz d'échappement à travers la turbine, et on élabore une consigne de richesse pour le moteur correspondant à la richesse maximale admissible par le moteur. Une telle soupape de décharge équipe classiquement les moteurs à turbocompresseur afin d'éviter que le turbocompresseur ne « s'emballe », c'est-à-dire que sa vitesse de rotation ne devienne trop grande. Cette soupape est aménagée entre la soupape d'échappement et l'entrée de la turbine et quand cette soupape est fermée, la totalité des gaz d'échappement passe à travers la turbine.

Encore à titre de variante à l'étape E5, dans le cas d'un moteur à essence, on commande la pleine ouverture du papillon des gaz placé à l'entrée du collecteur d'admission pour obtenir le plus rapidement possible la pleine charge, et on élabore une consigne de richesse pour le moteur correspondant à la richesse maximale admissible par le moteur.

Les actions décrites ci-dessus mises en œuvre à l'étape E5 au niveau du moteur et de la turbine du turbocompresseur sont appliquées tant que la pression PCOLL mesurée dans le collecteur d'admission du moteur est inférieure à une pression de consigne PCOLL_cible représentative de la pression de suralimentation requise, par exemple tant que la pression dans le collecteur d'admission n'a pas atteint environ 90% de la pression de consigne.

Dans le même temps que l'étape E4, dans laquelle on passe progressivement de la deuxième cartographie à la première cartographie de réglage de la géométrie du compresseur, on régule dans une étape E6 la pression de suralimentation dans le collecteur d'admission autour de la pression de suralimentation requise pour atteindre le couple maximal lorsque le régime moteur est stabilisé, en agissant sur la commande de la position des ailettes de la turbine ou sur la commande de l'ouverture de la soupape de décharge de la turbine.

Puis, dans une étape E7, on utilise totalement la première cartographie correspondant aux réglages optimisés de la géométrie du compresseur en fonctionnement stabilisé du moteur.

La figure 4, qui représente deux courbes de rendement du compresseur en fonction du temps, respectivement avec et sans application des réglages de la position des ailettes du compresseur optimisés pour le fonctionnement transitoire du moteur, illustre l'amélioration du rendement du compresseur obtenu grâce à la mise en œuvre de ces réglages dans le cas d'un fonctionnement transitoire. Il apparaît ainsi qu'on obtient des rendements plus élevés, qui sont favorables pour les performances et le temps de réponse du moteur en fonctionnement transitoire, mais qui sont également favorables pour la consommation du moteur par diminution des pertes par pompage du moteur.

## Revendications

1. Procédé de commande d'un turbocompresseur de suralimentation pour moteur à combustion interne de véhicule automobile du type comprenant une turbine et un compresseur à géométrie variable, dans lequel on régule la pression de suralimentation en réglant la géométrie du compresseur à géométrie variable à partir d'une valeur de réglage de la géométrie du compresseur, ladite valeur de réglage étant issue d'une première cartographie (C1) de valeurs de réglage de la géométrie du compresseur en fonction du régime de rotation du moteur, correspondant à un rendement optimisé du compresseur pour un fonctionnement stabilisé du moteur,
et -on détecte (E1) un fonctionnement transitoire du moteur à la suite d'une demande brusque d'accélération du moteur, **caractérisé en ce que** :
- dès la détection, on commande (E3) une modification du réglage de la géométrie du compresseur à géométrie variable à partir d'une deuxième cartographie (C2) de valeurs de réglage de la géométrie du compresseur en fonction du régime de rotation du moteur, correspondant à un rendement optimisé du compresseur pour un fonctionnement transitoire du moteur, et
- on opère (E4) une commutation progressive du réglage de la géométrie du compresseur selon la deuxième cartographie vers le réglage selon la première cartographie, par détection de l'évolution dans le temps du niveau de couple réalisé par le moteur par rapport à un niveau de couple maximal obtenu lorsque le régime moteur est stabilisé.

2. Procédé selon la revendication 1, **caractérisé en ce que** qu'on commute progressivement de la deuxième cartographie à la première cartographie lorsque le couple moteur est au moins égal à 90% du niveau de couple maximal obtenu lorsque le régime moteur est stabilisé.

3. Procédé selon la revendication 1 ou 2, **caractérisé en ce que** la détection (E1) du fonctionnement transitoire du moteur comprend la comparaison à un seuil prédéfini de l'évolution dans le temps du degré d'enfoncement de la pédale d'accélérateur associée au moteur.

4. Procédé selon la revendication 3, **caractérisé en ce que** le fonctionnement transitoire est détecté lorsque la dérivée par rapport au temps du degré d'enfoncement de la pédale d'accélérateur est supérieur au seuil prédéfini.

5. Procédé selon l'une quelconque des revendications précédentes, **caractérisé en ce que** les valeurs de réglage de la géométrie du compresseur cartographiées dans les première et deuxième cartographies permettent de régler l'orientation d'ailettes à orientation variable équipant le compresseur, les valeurs de réglage de la deuxième cartographie étant adaptées pour commander une position d'ouverture plus importante des ailettes que les valeurs de réglage de la première cartographie en fonction du régime moteur.

6. Procédé selon l'une quelconque de revendications précédentes, **caractérisé en ce que**, pendant la mise en œuvre de la commande (E3) de la géométrie du compresseur à géométrie variable selon la deuxième cartographie (C2), la turbine du turbocompresseur étant une turbine à géométrie variable équipée d'ailettes à orientation variable, on règle (E5) l'orientation des ailettes de la turbine dans une position de fermeture des ailettes et on élabore une consigne de richesse pour le moteur correspondant à la richesse maximale admissible par le moteur, tant que la pression mesurée dans le collecteur d'admission du moteur est inférieure à une pression de consigne représentative de la pression de suralimentation requise.

7. Procédé selon l'une quelconque des revendications 1 à 5, **caractérisé en ce que**, pendant la mise en œuvre de la commande (E3) de la géométrie du compresseur à géométrie variable selon la deuxième cartographie (C2), la turbine du turbocompresseur étant une turbine à géométrie fixe, on commande une soupape de décharge, aménagée entre une soupape d'échappement des gaz d'échappement en sortie du moteur et l'entrée de la turbine, dans une position de fermeture, de façon à faire passer la totalité des gaz d'échappement à travers la turbine et on élabore une consigne de richesse pour le moteur correspondant à la richesse maximale admissible par le moteur, tant que la pression mesurée dans le collecteur d'admission du moteur est inférieure à une pression de consigne représentative de la pression de suralimentation requise.

8. Procédé selon l'une des revendication 6 ou 7, **caractérisé en ce que** pendant la mise en œuvre de la commutation progressive (E4) du réglage de la géométrie du compresseur selon la deuxième cartographie vers le réglage selon la première cartographie, on régule (E6) la pression de suralimentation dans le collecteur d'admission autour de la pression de suralimentation requise pour atteindre le couple maximal lorsque le régime moteur est stabilisé, en modifiant la géométrie de la turbine ou en commandant la soupape de décharge.

9. Moteur à combustion interne suralimenté comprenant un turbocompresseur du type comportant une turbine et un compresseur à géométrie variable, dans lequel une unité de contrôle électronique du moteur agit sur une commande de la géométrie du compresseur, caractérisé en ce ladite unité de contrôle est configurée pour mettre en œuvre toutes les étapes du procédé selon l'une quelconque des revendications précédentes.

10. Véhicule automobile, **caractérisé en ce qu'**il comprend un moteur selon la revendication 9.

## Patentansprüche

1. Verfahren zur Steuerung eines Turboladers für eine Brennkraftmaschine eines Kraftfahrzeugs, des Typs, welcher eine Turbine und einen Kompressor mit variabler Geometrie umfasst, wobei der Ladedruck geregelt wird, indem die Geometrie des Kompressors mit variabler Geometrie anhand eines Einstellwertes der Geometrie des Kompressors geregelt wird, wobei dieser Einstellwert aus einem ersten Kennfeld (C1) von Einstellwerten der Geometrie des Kompressors in Abhängigkeit von der Drehzahl des Motors entnommen wird, das einer optimalen Leistung des Kompressors für einen stabilisierten Betrieb des Motors entspricht,
und
ein transienter Betrieb des Motors im Anschluss an eine plötzliche Beschleunigungsanforderung des Motors detektiert wird (E1), **dadurch gekennzeichnet, dass**:
- ab der Detektion eine Änderung der Einstellung der Geometrie des Kompressors mit variabler Geometrie anhand eines zweiten Kennfeldes (C2) von Einstellwerten der Geometrie des Kompressors in Abhängigkeit von der Drehzahl des Motors gesteuert wird (E3), das einer optimalen Leistung des Kompressors für einen transienten Betrieb des Motors entspricht, und
- eine allmähliche Umschaltung von der Einstellung der Geometrie des Kompressors gemäß dem zweiten Kennfeld zur Einstellung gemäß dem ersten Kennfeld vorgenommen wird (E4), durch Detektion des zeitlichen Verlaufs des Niveaus des vom Motor erzeugten Drehmoments in Bezug auf das maximale Drehmomentniveau, das erhalten wird, wenn die Motordrehzahl stabilisiert ist.

2. Verfahren nach Anspruch 1, **dadurch gekennzeichnet, dass** allmählich vom zweiten Kennfeld zum ersten Kennfeld umgeschaltet wird, wenn das Motordrehmoment mindestens 90 % des maximalen Drehmomentniveaus beträgt, das erhalten wird, wenn die Motordrehzahl stabilisiert ist.

3. Verfahren nach Anspruch 1 oder 2, **dadurch gekennzeichnet, dass** die Detektion (E1) des transienten Betriebs des Motors den Vergleich mit einem vordefinierten Schwellenwert des zeitlichen Verlaufs des Grades des Niedertretens des dem Motor zugeordneten Gaspedals umfasst.

4. Verfahren nach Anspruch 3, **dadurch gekennzeichnet, dass** der transiente Betrieb detektiert wird, wenn die Ableitung des Grades des Niedertretens des Gaspedals nach der Zeit größer als der vordefinierte Schwellenwert ist.

5. Verfahren nach einem der vorhergehenden Ansprüche, **dadurch gekennzeichnet, dass** die Einstellwerte der Geometrie des Kompressors, die im ersten und zweiten Kennfeld abgelegt sind, ermöglichen, die Ausrichtung von Schaufeln mit variabler Ausrichtung, mit denen der Kompressor ausgestattet ist, zu verstellen, wobei die Einstellwerte des zweiten Kennfeldes dafür ausgelegt sind, eine Position einer weiteren Öffnung der Schaufeln anzusteuern, als die Einstellwerte des ersten Kennfeldes in Abhängigkeit von der Motordrehzahl.

6. Verfahren nach einem der vorhergehenden Ansprüche, **dadurch gekennzeichnet, dass** während der Durchführung der Steuerung (E3) der Geometrie des Kompressors mit variabler Geometrie gemäß dem zweiten Kennfeld (C2), wenn die Turbine des Turboladers eine Turbine mit variabler Geometrie ist, die mit Schaufeln mit variabler Ausrichtung ausgestattet ist, die Ausrichtung der Schaufeln der Turbine in eine Position des Schließens der Schaufeln eingestellt wird (E5) und ein Sollwert der Anreicherung für den Motor erstellt wird, welcher der für den Motor zulässigen maximalen Anreicherung entspricht, solange der im Ansaugkrümmer des Motors gemessene Druck niedriger als ein Solldruck ist, der für den erforderlichen Ladedruck repräsentativ ist.

7. Verfahren nach einem der Ansprüche 1 bis 5, **dadurch gekennzeichnet, dass** während der Durchführung der Steuerung (E3) der Geometrie des Kompressors mit variabler Geometrie gemäß dem zweiten Kennfeld (C2), wenn die Turbine des Turboladers eine Turbine mit fester Geometrie ist, ein Wastegate, das zwischen einem Abgasauslassventil am Ausgang des Motors und dem Einlass der Turbine angeordnet ist, in eine Schließposition gestellt wird, um die gesamten Abgase durch die Turbine strömen zu lassen, und ein Sollwert der Anreicherung für den Motor erstellt wird, welcher der für den Motor zulässigen maximalen Anreicherung entspricht, solange der im Ansaugkrümmer des Motors gemessene Druck niedriger als ein Solldruck ist, der für den erforderlichen Ladedruck repräsentativ ist.

8. Verfahren nach einem der Ansprüche 6 oder 7, **dadurch gekennzeichnet, dass** während der Durchführung der allmählichen Umschaltung (E4) von der Einstellung der Geometrie des Kompressors gemäß dem zweiten Kennfeld zur Einstellung gemäß dem ersten Kennfeld der Ladedruck im Ansaugkrümmer so geregelt wird (E6), dass er dem Ladedruck nahekommt, der erforderlich ist, um das maximale Drehmoment zu erreichen, wenn die Motordrehzahl stabilisiert ist, indem die Geometrie der Turbine geändert wird oder indem das Wastegate angesteuert wird.

9. Brennkraftmaschine mit Aufladung, welche einen Turbolader des Typs umfasst, welcher eine Turbine und einen Kompressor mit variabler Geometrie aufweist, wobei ein elektronisches Steuergerät des Motors auf eine Steuerung der Geometrie des Kompressors einwirkt, **dadurch gekennzeichnet, dass** das Steuergerät dafür ausgelegt ist, alle Schritte des Verfahrens nach einem der vorhergehenden Ansprüche auszuführen.

10. Kraftfahrzeug, **dadurch gekennzeichnet, dass** es eine Brennkraftmaschine nach Anspruch 9 umfasst.

## Claims

1. Method for controlling a turbocharger for an internal-combustion engine of a motor vehicle, of the type comprising a turbine and a variable-geometry compressor, in which the boost pressure is adjusted by adjusting the geometry of the variable-geometry compressor on the basis of a value of adjustment of the geometry of the compressor, said adjustment value being derived from a first mapping (C1) of values of adjustment of the geometry of the compressor as a function of the speed of rotation of the engine, corresponding to an optimized efficiency of the compressor for a stabilized operation of the engine,
and
a transient operation of the engine is detected (E1) following a sudden demand for acceleration of the engine, **characterized in that**:
- upon detection, a modification of the adjustment of the geometry of the variable-geometry compressor is controlled (E3) on the basis of a second mapping (C2) of values of adjustment of the geometry of the compressor as a function of the speed of rotation of the engine, corresponding to an optimized efficiency of the compressor for a transient operation of the engine, and
- a progressive switching is performed (E4) of the adjustment of the geometry of the compressor according to the second mapping toward the adjustment according to the first mapping, by detection of the evolution over time of the level of torque realized by the engine in comparison with a maximum level of torque obtained when the engine speed is stabilized.

2. Method according to Claim 1, **characterized in that** the method switches progressively from the second mapping to the first mapping when the engine torque is equal to at least 90 % of the maximum level of torque obtained when the engine speed is stabilized.

3. Method according to Claim 1 or 2, **characterized in that** the detection (E1) of the transient operation of the engine includes comparison with a predefined threshold of the evolution over time of the degree of depression of the accelerator pedal linked with the engine.

4. Method according to Claim 3, **characterized in that** transient operation is detected when the derivative with respect to time of the degree of depression of the accelerator pedal is greater than the predefined threshold.

5. Method according to any one of the preceding claims, **characterized in that** the values of adjustment of the geometry of the compressor that have been mapped in the first and second mappings enable the orientation of variable-orientation blades with which the compressor is equipped to be adjusted, the values of adjustment of the second mapping being suitable to control a more significant opening position of the blades than the values of adjustment of the first mapping as a function of the engine speed.

6. Method according to any one of the preceding claims, **characterized in that** during the implementation of the control (E3) of the geometry of the variable-geometry compressor according to the second mapping (C2), the turbine of the turbocharger being a variable-geometry turbine equipped with variable-orientation blades, the orientation of the blades of the turbine is adjusted (E5) into a closure position of the blades, and a reference value of richness for the engine is worked out, corresponding to the maximum richness allowable by the engine, so long as the pressure measured in the intake manifold of the engine is lower than a set pressure that is representative of the requisite boost pressure.

7. Method according to any one of Claims 1 to 5, **characterized in that** during the implementation of the control (E3) of the geometry of the variable-geometry compressor according to the second mapping (C2), the turbine of the turbocharger being a fixed-geometry turbine, a relief valve, arranged between an exhaust valve for the exhaust gases at the outlet of the engine and the inlet of the turbine, is controlled into a closure position so as to cause all of the exhaust gases to pass through the turbine, and a reference value of richness for the engine is worked out, corresponding to the maximum richness allowable by the engine, so long as the pressure measured in the intake manifold of the engine is lower than a set pressure that is representative of the requisite boost pressure.

8. Method according to one of Claims 6 and 7, **characterized in that** during the implementation of the progressive switching (E4) of the adjustment of the geometry of the compressor according to the second mapping toward the adjustment according to the first mapping, the boost pressure in the intake manifold is adjusted (E6) around the boost pressure required in order to attain the maximum torque when the engine speed is stabilized, by modifying the geometry of the turbine or by controlling the relief valve.

9. Supercharged internal-combustion engine including a turbocharger of the type comprising a turbine and a variable-geometry compressor, in which an electronic control unit of the engine acts on a control of the geometry of the compressor, **characterized in that** said control unit is configured to implement all of the steps of the method according to any one of the preceding claims.

10. Motor vehicle, **characterized in that** it includes an engine according to Claim 9.
